# EUROPÄISCHE PATENTSCHRIFT

(11) **EP 2 525 309 B1**
(45) Veröffentlichungstag und Bekanntmachung des Hinweises auf die Patenterteilung: **18.07.2018**
(21) Anmeldenummer: 11166251.6
(22) Anmeldetag: 16.05.2011
(51) Int. Cl.: G06Q 10/08

(54) **Stationäre oder mobile Station zur Bereitstellung von Konsumgütern, insbesondere von frischen und gefrorenen Lebensmitteln**
Stationary or mobile system for providing consumer goods, in particular fresh and frozen foods
Station fixe ou mobile de préparation de biens de consommation, notamment d'aliments frais et congelés

(43) Veröffentlichungstag der Anmeldung: 21.11.2012
(73) Patentinhaber: Game Changer AG, 92660 Neustadt a.d. Waldnaab (DE)
(72) Erfinder: Krachtus, Werner, 92699, Bechtsrieth (DE)
(74) Vertreter: Lermer, Christoph

(56) Entgegenhaltungen:
- EP-A1- 2 246 814
- WO-A1-01/78022
- FR-A1- 2 643 479
- US-A- 5 640 002
- US-A1- 2006 206 395
- US-A1- 2007 150 373
- US-A1- 2008 308 356

## Beschreibung

### TECHNISCHES GEBIET

Die Anmeldung bezieht sich auf ein System zur Bereitstellung von Konsumgütern, insbesondere von frischen und gefrorenen Lebensmitteln, umfassend eine zentrale Kommissionierstation zur Kommissionierung von Waren. Außerdem bezieht sich die Anmeldung auf ein Verfahren zur Bereitstellung von Konsumgütern, insbesondere von Lebensmitteln, umfassend die folgenden Schritte: a) Übertragung von Daten zur Zusammenstellung eines Warenkorbs aus einer Vielzahl von Waren; und b) Kommissionierung der Waren zur Bereitstellung des Warenkorbs.

### STAND DER TECHNIK

Lebensmittel werden in der Regel über den Einzelhandel an die Endverbraucher abgegeben. Der Einzelhandel bezieht die Waren vom Großhandel. Je nach Nachfrage durch die Endverbraucher werden regelmäßig bestimmte Warenmengen des Sortiments nachbestellt. Die FR2643479A1 offenbart ein System zur Bereitstellung von Konsumgütern gemäß dem Stand der Technik. Im Großhandel werden die Waren kommissioniert, d. h. ein Sortiment von Waren wird aus einem Gesamtangebot von Waren zusammengestellt. Die Zusammenstellung kann händisch oder automatisiert erfolgen. In modernen Großlagern bzw. Logistikstationen wird diese Aufgabe durch komplexe Logistiksysteme übernommen, die die Einlagerung, Lagerhaltung und Kommissionierung von Artikeln bewerkstelligen. Die kommissionierten Warenpakete werden anschließend zu den Verkaufs stätten des Einzelhandels transportiert.

Bei leicht verderblichen Waren ist dabei in jedem Fall darauf zu achten, dass die Kühlkette, beginnend bei der Produktion und Verpackung der Lebensmittel, bis zur Abnahme durch den Endverbraucher, nicht unterbrochen wird. Selbst wenn jedoch die Waren ohne Unterbrechung der Kühlkette in den Einzelhandel gelangt sind, wird die Kühlkette häufig beim Transport der Ware von der Verkaufs stätte an den Wohnort des Endverbrauchers unterbrochen, da die Ware häufig nicht auf dem schnellsten Weg, und außerdem ohne hinreichende Kühlmaßnahmen, zum Wohnort des Endverbrauchers gelangt.

Als Alternative zum Erwerb von Waren im Einzelhandel ist es möglich, bestimmte Artikel im Internet, bspw. in Online-Shops, zu bestellen. Der Betreiber des Online-Verkaufgeschäfts nimmt eine Bestellung entgegen, verpackt die Ware und übersendet diese als Paket an den Kunden. Lebensmittel eignen sich für den Erwerb in Online-Shops nur bedingt, da nicht sicher gestellt werden kann, dass verderbliche Ware ohne Unterbrechung der Kühlkette zum Verbraucher gelangt. So variieren die Transportzeiten erheblich und es ist notwendig, dass der Verbraucher am Abnahmeort anwesend ist.

Außerdem stellt sich die zeitliche Bindung des Verbrauchers an Ladenöffnungszeiten beim Kauf im Einzelhandel bzw. die Notwendigkeit, bestellte verderbliche Ware persönlich annehmen zu müssen, in vielen Fällen als unbequem bzw. nicht realisierbar heraus. Insbesondere ist es dem Verbraucher oft nicht möglich, eine geeignete Kühlung für die verderbliche Ware sicherzustellen.

### AUFGABE DER ERFINDUNG

Ausgehend davon besteht die Aufgabe der vorliegenden Erfindung darin, ein System und ein Verfahren zur Bereitstellung von Konsumgütern, insbesondere von Lebensmitteln, vorzuschlagen, die dem Empfänger größere zeitliche Flexibilität bei der Warenannahme bieten.

### TECHNISCHE LÖSUNG

Diese Aufgabe wird gelöst durch ein System und ein Verfahren zur Bereitstellung von Konsumgütern, insbesondere von frischen bzw. gefrorenen Lebensmitteln, gemäß dem Anspruch 1 bzw. gemäß dem Anspruch 11. Vorteilhafte Ausführungsformen der Erfindung ergeben sich aus den Merkmalen der abhängigen Ansprüche.

Die dezentralen Abholstationen sind zur Aufbewahrung von Transferbehältern und zur Ausgabe eines bestimmten Transferbehälters an einen entsprechend identifizierten Abnehmer bestimmt.

Die Bereitstellung der Ware erfolgt entweder in einer stationären Station, bspw. unterirdisch an Parkplätzen (Drive-through-System) oder durch die Bereitstellung mobiler Boxen, z. B. entsprechend ausgestatteter Container. Die stationäre Station ist bspw. wie ein Regallager aufgebaut, aus dem der Kunde nach einer entsprechenden Identifizierung seine kommissionierte Bestellung erhält. Der Empfänger einer Bestellung kann somit stets auf das vollautomatische System zugreifen. Die Station kann ein Kühlsystem umfassen, sodass die Kühlkette nicht unterbrochen wird, auch wenn eine maximale Lagerzeit für die am schnellsten verderbenden Waren des Warenkorbs überschritten wird.

Das System hat außerdem den Vorteil, dass nur wenige Produkte durch Bruch der Verpackung oder sonstige Beschädigung verderben oder unverkäuflich werden und aus dem Handel genommen werden müssen, da ein Zugriff durch andere Verbraucher während des gesamten Transportwegs bis in den Befugnisbereich des Empfängers verhindert wird. Dies hat wirtschaftliche Vorteile.

Darüber hinaus ist das System Ressourcen schonend. In Zeiten knapper und teurer werdender Lebensmittel ist es vorteilhaft, wenn möglichst wenig Ware, die nicht rechtzeitig abgenommen wurde, entsorgt werden muss. Im herkömmlichen Einzelhandel fallen große Mengen an Waren an, die nicht verbraucht werden.

In einer besonderen Ausführungsform der Erfindung weist das System eine Vielzahl von Verbraucherstationen und eine Datenaustauschverbindung zwischen der Verbraucherstation und der zentralen Kommissionierstation zur Übermittlung eines Kommissionierauftrags auf. Eine Bestellung kann beispielsweise per Internet erfolgen. Bei dieser Art der Bestellung können Präferenzen der einzelnen Kunden festgehalten und bei nachfolgenden Käufen Vorschläge für die Zusammenstellung von Warenkörben gemacht werden. Der Vorgang kann weitgehend automatisiert werden. Außerdem bietet das elektronische Anbieten bekannte Vorteile, nämlich die einfache und kostengünstige Vermittlung von Werbung, Verbrauchertips, etc., insbesondere gezielt, in Abhängigkeit von den Präferenzen der Kunden. Zudem können Kosten gespart werden, da der Einzelhandel und dessen Leistungen entfallen, und die Ware nicht aufwendig verpackt und präsentiert werden muss.

Insbesondere weist das System wenigstens ein zentrales Lager auf, wobei das zentrale Lager eine Kühlvorrichtung zur Kühlung verderblicher Ware aufweist.

Vorzugsweise weist die dezentrale Abholstation wenigstens eine Identifikationseinrichtung zur Identifikation eines Empfängers an der dezentralen Abholstation auf. Der Zugriff auf einen bestimmten Warenkorb bzw. Transferbehälter ist nur durch einen entsprechend identifizierten Abnehmer möglich. Die Identifikation kann elektronisch (Chipkarte, Barcode), durch Eingabe eines Codes, durch Auslesen einer ausgedruckten Quittung mit einer Kennzeichnung, durch biometrische Merkmale des Empfängers, etc., erfolgen.

Insbesondere weist die dezentrale Abholstation eine Ausgabeeinrichtung zur Ausgabe eines oder mehrerer bestimmter Warenkörbe auf. Die Ausgabeeinrichtung ist zunächst verschlossen, bis sich ein Empfänger erfolgreich identifiziert hat. Damit ist der Warenkorb vor unbefugtem Zugriff geschützt. Anschließend wird der Warenkorb bzw. Transferbehälter, der dem identifizierten Empfänger automatisch zugeordnet wurde, zur Ausgabeeinrichtung transportiert und dort bereitgestellt. Die Ausgabeeinrichtung wird nun zur Entnahme des Warenkorbs geöffnet.

Die Lagerung in der dezentralen Station wird beispielsweise durch Einlagerung in ein Regallager, der Transport durch ein Regalbediengerät bewerkstelligt. Das Regalbediengerät wird durch eine Steuerung bedient, die den Empfänger identifiziert, einen eingelagerten, dem Empfänger zuordneten Warenkorb und seinen Lagerplatz ermittelt, das Regalbediengerät steuert, dass dieses auf den Warenkorb zugreift und diesen zur Ausgabeeinrichtung transportiert. Anschließend öffnet die Steuerung die Ausgabeeinrichtung.

Die Ausgabeeinrichtung kann auf jede mögliche Weise aufgebaut sein. So kann eine verschließbare Klappe vorgesehen sein. Oder es kann eine Dreheinrichtung mit Kammern vorgesehen sein, wobei eine Kammer zunächst im dezentralen Lager bestückt und dann zu einer Öffnung hin gedreht wird. Das System ist somit vollständig automatisiert und 24 Stunden am Tag einsatzbereit.

Die dezentrale Abholstation kann eine Einrichtung zur Aufnahme und zur Einlagerung von Empfängern abgegebener Warenkörbe in ein Lager der dezentralen Abholstation aufweisen.

Die dezentrale Abholstation weist ein Kühlsystem (z. B. eine Kältemaschine) zur Kühlung darin gelagerter Warenkörbe auf damit die Kühlkette nicht unterbrochen wird, auch wenn zwischen der Einlagerung und der Abholung ein längerer Zeitraum liegen sollte.

Die dezentrale Abholstation kann ein Regallager und/oder ein Regalbediengerät aufweisen. Insbesondere ist die dezentrale Abholstation als stationäre Einrichtung an einem für die Öffentlichkeit zugänglichen Ort ausgebildet.

In einer Ausführungsform der Erfindung kann die dezentrale Abholstation als mobile Einrichtung ausgebildet sein. Beispielsweise kann die Abholstation ein Container mit den für die Erfindung notwendigen Einbauten und Einrichtungen sein.

Das System weist insbesondere einen, vorzugsweise eine Vielzahl von Transferbehältern auf, die zwischen den Stationen des Systems transportiert werden, wobei in einem Transferbehälter Waren eines bestimmten Warenkorbs aufgenommen sind. Die Transferbehälter werden im System zwischen den Stationen bewegt, bis sie vom Empfänger aus dem System entnommen werden bzw. nachdem sie wieder ins System zurückführt wurden.

Die Transferbehälter umfassen jeweils eine Kühleinrichtung zur Kühlung bzw. zum Kühlhalten von Waren, die im Transferbehälter aufgenommenen sind. Die Kühleinrichtung umfasst insbesondere eine Wärme- bzw. Kälteisolierung, und/oder einen Aufnahmeraum zur Aufnahme eines Kühlmediums, und/oder ein Kühlaggregat. Die zuerst genannte Variante ist am kostengünstigsten und wird daher die erste Wahl sein. Isoliermaterialien (z. B. Styropor) sind kostengünstig und können über einen längeren Zeitraum eine ausreichende Wärme-/Kälteisolation gewährleisten. Während in den Lagerstätten und z. T. auch in den Transportmitteln auch in herkömmlichen Systemen Kühleinrichtungen vorhanden sind, wird die Kühlkette bei dem erfindungsgemäßen System zum Bereich des Endverbrauchers hin ergänzt und komplettiert. Die Transferbehälter werden an den Transport- und Lagerstätten nach- bzw. heruntergekühlt um anschließend über einen bestimmten Zeitraum diese Temperatur zu halten. Die Kühlung kann dabei sehr gezielt auch an bestimmten Außenbereichen der Transportbehälter erfolgen.

Die Transferbehälter können in einer besonders bevorzugten Ausführungsform unterschiedliche Bereiche aufweisen, die für Kühlketten unterschiedlichen Temperaturniveaus geeignet sind. So können beispielsweise in einem Transferbehälter ein Gefrierfach, ein Kühlfach und ein nicht wärmeisolierter Bereich für Produkte mit unterschiedlichen Anforderungen vorgesehen sein. Dies kann dadurch erreicht werden, dass nur bestimmte Bereiche isoliert werden, und diese unter Umständen unterschiedlich stark. Außerdem kann vorgesehen sein, bestimmte Bereiche der Transferbox initial stärker bzw. niedriger abzukühlen als andere Bereiche. Durch die Isolation auch zwischen den Bereichen wird das jeweilige (zwischen den Bereichen unterschiedliche) Temperaturniveau über einen längeren Zeitraum aufrecht erhalten. Während des gesamten Prozesses von der Produktion des Lebensmittels bis zum Endverbraucher können so parallel Kühlketten mit unterschiedlichen Temperaturniveaus aufrecht erhalten werden.

Die zentrale Kommissionierstation stellt die bestellten Kundenpakete in einem gekühlten Transferbehälter bzw. einer isolierten Kühlbox zusammen. Die Kommissionierstation ist so ausgelegt, dass sie auch kleine Pakete mit kleinen Produktmengen für Endkunden zusammenstellen kann.

Durch die Kommissionierung der Waren direkt in der Kommissionierstation für den Endverbraucher, wobei die Waren in einen erfindungsgemäßen Transferbehälter eingebracht werden, wird sicher gestellt, dass der Endverbraucher sein Warenpaket erhält, ohne dass die Kühlkette unterbrochen wird. Der Behälter kann dabei an der dezentralen Abholstation hinterlegt werden. Dadurch wird die zeitliche Flexibilität des Verbrauchers bezüglich der Warenannahme erhöht. Wenn beispielsweise der Verbraucher am Abend zu wenig Zeit hat, um während der Ladenöffnungszeiten Lebensmitteleinkäufe zu tätigen, kann mit Hilfe des erfindungsgemäßen Systems ein bestellter Warenkorb jederzeit abgeholt werden. Die Kühlkette wird dabei nicht unterbrochen. Außerdem ist die Ware vor dem Zugriff durch andere Kunden geschützt.

Die Transferbehälter können eine Kennzeichnung aufweisen, und die dezentrale Abholstation kann eine Einrichtung zur Erkennung der Kennzeichnung aufweisen. Damit kann, nach einer Kundenidentifikation der passende Warenkorb ermittelt und sein Lagerort in der Station bestimmt werden.

Ein erfindungsgemäßes Verfahren zur Bereitstellung von Konsumgütern, insbesondere von Lebensmitteln, umfasst Merkmale von Anspruch 11. Das Verfahren folgt unter Ausschluss des Einzelhandels. Auf diese Weise können Kosten eingespart werden, die beispielsweise durch die längerfristige Lagerung, durch Warenpräsentation und -verpackung entstehen.

Vorzugsweise umfasst der Schritt c) ein Einlagern des Transferbehälters in der dezentralen Abholstation, wobei ein Zugriff durch Unbefugte auf den Transferbehälter verhindert wird. Der Schritt d) umfasst insbesondere eine automatische bzw. elektronische Identifizierung der Empfänger.

Insbesondere wird im Verfahrensschritt a) die Vielzahl von Waren elektronisch präsentiert und/oder angegeben, und der zusammengestellte Warenkorb umfasst einzelne der Waren. Der Verfahrensschritt e) kann die Freigabe eines bestimmten Transferbehälters nach Durchführung der Identifikation zur Entnahme aus der dezentralen Abholstation umfassen. Insbesondere kann die Identifikation elektronisch erfolgen.

Das Verfahren kann einen weiteren Verfahrensschritt f) umfassen, in dem ein Transferbehälter zur zentralen Kommissionierstation und/oder zur dezentralen Abholstation zurückgeführt wird. Auf diese Weise können Leergut und Müll in der bereitgestellten Transferbehältern an den Anbieter zurückgegeben werden. Es können mehrere Transferbehälter pro Kunde im System zirkulieren. Die zurückgegebenen Verpackungen können recycelt (Einweg) oder wieder verwendet werden (Mehrweg).

Insbesondere umfasst das Verfahren die Zirkulation einer Vielzahl von Transferbehältern im System, wobei die Transferbehälter in einem ersten Abschnitt des Kreislaufs mit Waren, in einem zweiten Abschnitt des Kreislaufs leer oder mit zu entsorgendem Material beladen sind.

### KURZE BESCHREIBUNG DER FIGUREN

Weitere Merkmale und Vorteile der Erfindung werden aus der nachfolgenden Beschreibung anhand der beigefügten Figuren deutlich. Es zeigen:
- Figur 1: ein erfindungsgemäßes System zur Bereitstellung von Lebensmitteln;
- Figur 2: einen im System aus der Figur 1 integrierten Transferbehälter; und
- Figur 3: eine in das System aus der Figur 1 integrierte Station zur Bereitstellung von Lebensmitteln.

### DETAILLIERTE BESCHREIBUNG EINES BEVORZUGTEN

### AUSFÜHRUNGSBEISPIELS

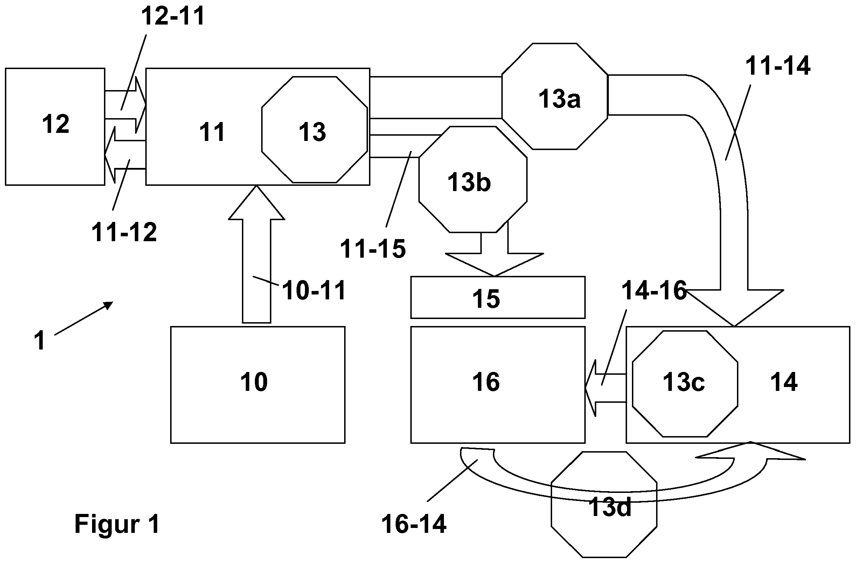

Die Figur 1 zeigt ein erfindungsgemäßes System 1 zur Bereitstellung von Lebensmitteln für Endverbraucher. Das System 1 weist eine, vorzugsweise mehrere dezentrale Verbraucherstationen 10, eine zentrale Kommissionierstation 11, ein zentrales Lager 12, Warenkörbe 13, 13a, 13b, 13c, 13d sowie eine dezentrale Abholstation 14 auf.

Von einer Verbraucherstation 10 können, angedeutet durch den Pfeil 10-11, Informationen, z. B. Warenbestellungen, an die zentrale Kommissionierstation 11 übermittelt werden. Insbesondere kann ein Verbraucher über die Verbraucherstation 10, bspw. einen Personal Computer (PC), ein Mobiltelefon, ein Multifunktionskommunikationsgerät, o. ä., Warenbestellungen an die Kommissionierstation 11 übermitteln. Zur Bewerkstelligung des Bestellvorgangs kann dem Verbraucher im System 1, bspw. durch Nutzung des Internets, ein Warenangebot vorgegeben werden. Die Auswahl verschiedener Waren durch den Endverbraucher, ebenso wie die Zahlungsabwicklung, kann in bekannter Weise, wie etwa in Internet-Verkaufssystemen (Internet-Shops), erfolgen. Der Datentransfer kann drahtlos oder über Kabel erfolgen. Das Warenangebot und die Warenpräsentation können, basierend auf vom Endverbraucher bereitgestellten Informationen oder abgeleitet aus dem früheren Kaufverhalten des Endverbrauchers, an den einzelnen Verbraucher angepasst werden.

Die zentrale Kommissionierstation 11 ist insbesondere eine (weitgehend) automatisierte Logistikanlage, die aus einzelnen Wareneinheiten Warenkörbe für Endverbraucher zusammenstellt. Nach dem Eingang der Bestellung 10-11 greift das Kommissioniersystem 11 auf ein zentrales Lager 12 zu (Pfeil 11-12) und entnimmt die bestellten Waren (Pfeil 12-11). Die Wareneinheiten werden in der Kommissionierstation 11 kommissioniert, d. h. gemäß den Kundenbestellungen zusammengestellt. Aus den Waren wird ein individueller Warenkorb 13, der der über die Verbraucherstation 10 eingegebenen Bestellung 10-11 entspricht, erstellt. An dem kommissionierten Paket 13 kann eine Markierung (bspw. einen Barcode oder RFID Chip) angebracht werden, die eine spätere Zuordnung des Warenkorbs 13 zur entsprechenden Bestellung 10-11 oder zur Person des Auftraggebers erlaubt.

Außerdem kann die Markierung Informationen enthalten, wohin der Warenkorb 13 geliefert und wo er zur Abholung durch einen Verbraucher zwischengelagert werden soll. Jeder Warenkorb kann als Transferbehälter 13 wie unten beschrieben konzipiert sein.

Im System 1 zirkuliert eine Vielzahl von Warenkörben, beispielhaft 13, 13a, 13b, 13c, 13d. Beispielsweise befindet sich ein bereits kommissionierter Warenkorb 13a auf dem Weg zu einer dezentralen stationären Abholstation 14 (Pfeil 11-14). Ein weiterer Warenkorb 13b kann direkt zu einer Empfänger- bzw. Verbraucherstation 15 geliefert werden (Pfeil 11-15). Außerdem kann in den Transferbehältern (z. B. 13b) Leergut und zu entsorgendes Material zurückgegeben werden.

In der dezentralen stationären Abholstation 14 werden kommissionierte Warenkörbe zwischengelagert, wie bspw. der Warenkorb 13c. Die dezentrale Abholstation 14 befindet sich an einem Ort in der Nähe bzw. im Einzugsbereich einer bestimmten Anzahl von Verbrauchern 16. Der Begriff "dezentral" bezieht sich auf das Gesamtsystem 1 und bedeutet, dass eine Vielzahl der dezentralen Abholstationen 14 im System vorgesehen ist, wobei alle Abholstationen 14 des Systems 1 von der zentralen Kommissionierstation 11 beliefert werden.

Die dezentrale Abholstation 14 kann an einem zugänglichen Ort, bspw. im Bereich einer Tiefgarage, einer Tankstelle, eines Parkplatzes, o. ä. aufgestellt sein. Die dezentrale Abholstation 14 kann dabei als stationäre Station oder als mobile Station bereitgestellt werden. Eine stationäre Station beinhaltet die dauerhafte Aufstellung eines Zwischenlagers bzw. einer Abgabevorrichtung. Eine mobile Abholstation kann etwa in Form eines Containers bereitgestellt werden, der die für die Abholstation notwendigen Einrichtungen und Einbauten aufweist.

Die Abholstation 14 weist ein Zwischenlager auf, kann also etwa wie ein Regallager für Warenkörbe 13c, bspw. mit einem Regalbediengerät, konzipiert sein. Außerdem weist die Abholstation 14 einen Ausgabebereich auf. Ein Verbraucher 16, der über die Verbraucherstation 10 einen Warenkorb 13c bestellt hat, identifiziert sich an der dezentralen Abholstation 14. Dies kann durch eine persönliche Kennung, durch einen Code, o. ä., erfolgen. Sofern ein Warenkorb 13c für den Verbraucher bereitsteht, wird dieser an den Verbraucher 16 abgegeben (Pfeil 14-16). Der Verbraucher 16 kann anschließend den Warenkorb 13c zu seinem Wohnort bringen und den Inhalt dort gekühlt weiter lagern.

Gleichzeitig besteht für den Verbraucher 16 die Möglichkeit, einen leeren Transferbehälter 13d, der auch (vorzugsweise recyclebare) Verpackungen enthalten kann, an die dezentrale Abholstation 14 abzugeben (Pfeil 16-14). Auf diese Weise entsteht für den Verbraucher 16 ein geschlossenes System von Versorgung mit Lebensmitteln und Entsorgung der anfallenden Verpackungen.

Wie anhand des Pfeils 11-15 dargestellt, kann ein Warenkorb 13b auch direkt an eine Verbraucherstation 15 versendet werden. Bei dieser Variante ist vorzugsweise am Ort der Anlieferung eine Aufnahmeeinrichtung vorgesehen, an die der Warenkorb 13b abgegeben und in der er gesichert aufbewahrt werden kann, bis der Verbraucher 16 den Warenkorb 13b entnimmt. Der Warenkorb 13b kann mittels eines Schlosses in einem befestigten Lagerraum der Verbraucherstation 15 sicher aufbewahrt sein. Es bietet sich an, ein automatisiertes System bereitzustellen, bei dem der Lieferant, bspw. durch Identifikation über den am Warenkorb 13b angebrachten Barcode, den Warenkorb 13b einlagert und der Verbraucher 16, beispielsweise mittels der Identifikation durch eine Chipkarte, Zugriff auf den Warenkorb 13b erhält. Die Verbraucherstation 15 kann etwa eine in der Größe an die Transferbehälter 13 angepasste Box sein, in der die Transferbehälter 13 aufgenommen werden können.

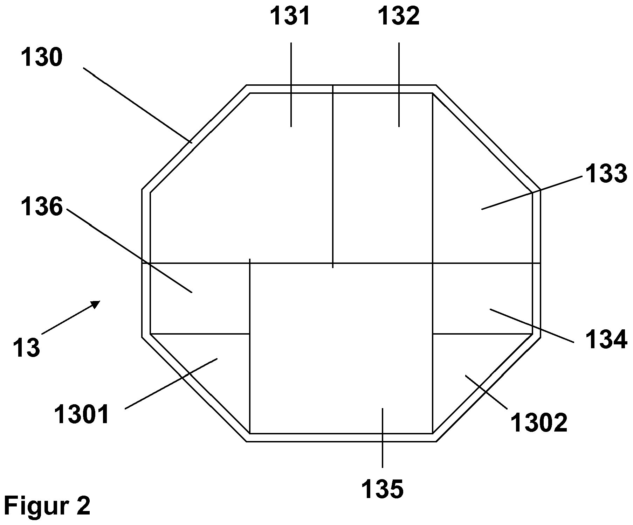

Das System 1 ist vorzugsweise für die Bereitstellung von Lebensmitteln an den Verbraucher konzipiert. Die Besonderheit daran ist, dass unter Lebensmitteln in der Regel auch verderbliche Ware vorhanden ist. Um dem Prozess des Verderbens der Lebensmittel zu verlangsamen, wird im herkömmlichen System aus Groß- und Einzelhandel sichergestellt, dass die Lebensmittel bis zur Abnahme durch den Endverbraucher in einer ununterbrochenen Kühlkette gelagert und weitergegeben werden. Um auch im vorliegenden System 1 eine ununterbrochene Kühlkette sicherzustellen, weist das Lager 12 Kühleinrichtungen auf, in denen die verderblichen Lebensmittel gekühlt gelagert werden. Um eine weitere Kühlung aufrechtzuerhalten, sind die im System 1 zirkulierenden Transferbehälter 13, 13a, 13b, 13c, 13d als Kühlboxen ausgebildet. Eine derartige Kühlbox 13 ist beispielhaft in der Figur 2 dargestellt.

Die Kühlbox 13 weist eine Vielzahl von Fächern 131, 132, 133, 134, 135, 136 mit unterschiedlicher Größe auf. Die einzelnen Fächer können hinsichtlich ihrer Größe und Form für die Aufnahme unterschiedlicher Waren oder Warenverpackungen angepasst sein, bspw. durch die Anpassung an Verpackungsgrößen einzelner Waren.

Erfindungsgemäß ist die Kühlbox 13 mit einer Kühleinrichtung ausgestattet. Die Kühleinrichtung kann insbesondere eine wärme- bzw. kälteisolierende Außenwand 130 aufweisen. Diese kann sich im gesamten Bereich der Außenwand der Kühlbox 13 erstrecken und den Aufnahmeraum vollständig umschließen. Die isolierende Wand 130 kann jedoch auch nur einen Teil des Innenraums der Kühlbox 13 umschließen, in den verderbliche Ware gezielt eingebracht wird. Die übrigen Waren können im nicht isolierten Teil der Kühlbox 13 aufbewahrt werden. Das System umfasst außerdem die Möglichkeit, dass die Kühlboxen 13 unterschiedliche Bereiche aufweisen, die für Kühlketten unterschiedlichen Temperaturniveaus geeignet sind. So kann beispielsweise für Tiefkühlkost ein Bereich sehr tiefer Temperatur (Gefrierfach), für bestimmte Lebensmittel eine niedrige Temperatur über 0° C, für Molkereiprodukte ein Kühlfach mit beispielsweise +7° C, für Obst und Gemüse ein Kühlfach mit noch etwas höherer Temperatur, und für nicht verderbliche Lebensmittel wie Reis oder Nudeln nicht gekühlte Fächer eingerichtet sein. Auf diese Weise können unterschiedliche Kühlniveaus aufrechterhalten werden, d. h. während des gesamten Prozesses von der Produktion des Lebensmittels bis zum Endverbraucher können parallel Kühlketten mit unterschiedlichen Temperaturniveaus aufrecht erhalten werden.

So könnten im Beispiel der Figur 2 nur die Fächer 131, 132 und 133 wärmeisoliert sein, die übrigen Fächer dagegen nicht. Die Fächer 131, 132 und 133 sind wiederum untereinander wärmeisoliert, sodass in jedem der Fächer eine andere Temperatur aufrecht erhalten werden kann. Wird nun anfangs das Fach 133 auf eine niedrigere Temperatur abgekühlt als die anderen Fächer 131 und 132, so wird diese niedrigere Temperatur über einen längeren Zeitraum aufrecht erhalten. Das Fach133 kann damit Baustein in einer Kühlkette auf dem niedrigen Temperaturniveau sein.

Außerdem kann die Kühleinrichtung einen oder mehrere Räume 1301 in beliebiger Anordnung zur Aufnahme eines passiven Kühlmediums aufweisen. So kann im Raum 1301 gekühltes Material mit hoher Wärmekapazität, bspw. Wasser, eingebracht sein. Vor dem Beladen der Kühlbox 13 mit verderblicher Ware wir dem Kühlmedium Wärme entzogen, sodass bspw. das vorhandene Wasser gefriert. Das Eis wird, während sich die Kühlbox 13 im Umlauf befindet, den Innenraum durch Wärmeentzug kühlen und damit im Bereich verderblicher Waren eine entsprechend niedrige Temperatur aufrechterhalten.

In einer alternativen Ausführungsform kann die Kühleinrichtung ein aktives Kühlelement 1302 aufweisen. Das aktive Kühlelement 1302 kann insbesondere ein batteriebetriebenes Kühlaggregat, bspw. ein Absorptionskühlaggregat, sein. Es ist auch vorstellbar, auf Sorptionsprozessen (bspw. Zeolith-Wasser-Systeme) basierende Kühlsysteme zu verwenden. Dieses erlaubt ein Aktivieren der Kühlung zu einem gegebenen Zeitpunkt und kann für die Kühlboxen angemessen dimensioniert werden. Selbstverständlich können die unterschiedlichen (aktiven und passiven) Maßnahmen beliebig kombiniert werden.

Durch die Bereitstellung einer erfindungsgemäßen Kühlbox wird sichergestellt, dass die Lebensmittel nach Verlassen des gekühlten zentralen Lagers 12 bis zum Endverbraucher 16 stets ausreichend gekühlt sind, d. h. eine Unterbrechung der Kühlkette verhindert wird, sodass die Ware nicht verdirbt.

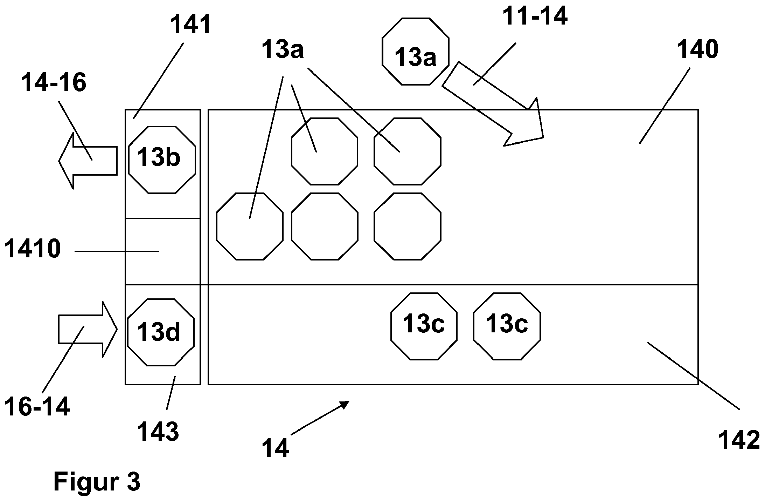

Die Figur 3 zeigt schematisch eine dezentrale Abholstation 14. Diese weist ein Regallager 114 zur Aufnahme kommissionierter und befüllter Warenkörbe 13a auf. Sind beispielsweise die Warenkörbe 13 als Kühlboxen mit (passiver) Isolierung ausgebildet und übersteigt die Lagerzeit bei höherer Temperatur eine bestimmte Höchstdauer, so kann sich die Isolierung als nicht ausreichend herausstellen. Das Regallager 114 kann daher optional als Kühllager mit einem Kühlsystem ausgebildet sein. Auf diese Weise wird verhindert, dass der Inhalt der eingelagerten Warenkörbe sich erwärmt.

Vorzugsweise kann das System (beispielsweise eine Einrichtung im dezentralen Lager) erkennen, wenn ein Warenkorb 13 innerhalb eines bestimmten Zeitraums nicht abgeholt wurde. Das System kann dann nach einem bestimmten Algorithmus reagieren. So kann der Warenkorb identifiziert und bei nächster Gelegenheit wieder zur zentralen Kommissionierstation zurück transportiert werden. Der Warenkorb kann auch an einen anderen Ort transportiert werden, z. B. an einen alternativen Lieferort, z. B. an ein anderes dezentrales Lager des Systems. Alternativ oder zusätzlich dazu kann der Besteller des Warenkorbs benachrichtigt oder gewarnt werden, dass der Warenkorb bereitsteht, aber noch nicht abgeholt wurde, und wie lange evtl. eine Abholung noch möglich ist. Dem Besteller kann angeboten werden, einen alternativen Abholort anzugeben oder die Abholung abzusagen.

Darüber hinaus weist die Abholstation 14 eine Ausgabeeinrichtung 141 auf. Ein Verbraucher identifiziert sich zunächst über die Identifikationseinrichtung 1410 der Ausgabeeinrichtung 141. Dabei kann jede mögliche Art der Identifikation, bspw. durch eine Magnetkarte, ein biometrisches Kennzeichen (z. B. Fingerabdruck) oder die Eingabe eines Codes/Passwortes erfolgen. Erkennt die Identifikationseinrichtung 1410 den Verbraucher, wird überprüft, ob und welcher Warenkorb sich im Lager 140 befindet. Anschließend wird dieser Warenkorb 13b durch eine Transporteinrichtung (z. B. Förderband) zur Ausgabeeinrichtung 141 gebracht und dort zur Entnahme durch den Endverbraucher (Pfeil 14-16) abgestellt und freigegeben.

Außerdem weist die dezentrale Abholstation 14 einen zweiten Lagerbereich 142 auf, der zur Aufnahme zurückgegebener Transferbehälter 13c bestimmt ist. In der Figur 3 wurde ein zurückgegebener Transferbehälter 13d in einer Rückgabeeinrichtung 143 abgelegt (Pfeil 16-14). In der Rückgabeeinrichtung 143 kann bestimmt werden, ob bspw. Pfand für zurückgegebenes Leergut anfällt. Außerdem kann im zurückgegebenen Transferbehälter 13d eingebrachtes Einweg-Material (eventuell vorsortiert) abgegeben werden. Dieses kann anschließend in einfacher Weise getrennt und recycelt werden.

## Patentansprüche

1. System (1) zur Bereitstellung von Konsumgütern, insbesondere von Lebensmitteln, umfassend:
eine Verbraucherstation (10), die zur Auswahl von Waren durch einen Verbraucher und zur Übermittlung der Bestellung der ausgewählten Waren ausgebildet ist, eine zentrale Kommissionierstation (11), die zur Kommissionierung von Waren zur individuellen Erstellung von mindestens einem Warenkorb (13) gemäß der Bestellung des Verbrauchers ausgebildet ist; eine dezentrale Abholstation (14), die zur Aufbewahrung der kommissionierten Warenkörbe (13) und zur Ausgabe eines bestimmten Warenkorbs (13b) an einen entsprechend identifizierten Abnehmer an einer Ausgabeeinrichtung (141) ausgebildet ist,
**dadurch gekennzeichnet, dass**
die Bestellung von Waren über die Verbrauchsstation (10) per Internet erfolgt, und das System (1) Transferbehälter (13) aufweist, die zwischen den Stationen des Systems (1) transportiert werden, wobei in einem Transferbehälter (13) Waren eines bestimmten Warenkorbs aufgenommen sind, und die dezentrale Abholstation (14) ein Kühlsystem zur Kühlung darin gelagerter Warenkörbe (13) und zum Nach- bzw. Herunterkühlen der Transferbehälter aufweist, und ein Regallager (114) und ein Regalbediengerät aufweist, wobei die Warenkörbe (13) mit bestellten Waren im Regallager abgelegt sind, wobei das Regalbediengerät einen Warenkorb (13) zur Ausgabeeinrichtung (141) transportiert, sobald sich der Verbraucher identifiziert hat.

2. System (1) nach Anspruch 1,
**dadurch gekennzeichnet, dass**
das System (1) eine Vielzahl von Verbraucherstationen (10) und eine Datenaustauschverbindung zwischen der Verbraucherstation (10) und der zentralen Kommissionierstation (11) zur Übermittlung eines Kommissionierauftrags aufweist.

3. System (1) nach einem der vorhergehenden Ansprüche,
**dadurch gekennzeichnet, dass**
das System (1) wenigstens ein zentrales Lager (12) aufweist, wobei das zentrale Lager (12) eine Kühlvorrichtung zur Kühlung verderblicher Ware aufweist.

4. System (1) nach einem der vorhergehenden Ansprüche,
**dadurch gekennzeichnet, dass**
die dezentrale Abholstation (14) eine Identifikationseinrichtung (1410) zur Identifikation eines Empfängers an der dezentralen Abholstation (14) aufweist.

5. System (1) nach einem der vorhergehenden Ansprüche,
**dadurch gekennzeichnet, dass**
die dezentrale Abholstation (14) eine Ausgabeeinrichtung (141) zur Ausgabe eines oder mehrerer bestimmter Warenkörbe (13) aufweist.

6. System (1) nach einem der vorhergehenden Ansprüche,
**dadurch gekennzeichnet, dass**
die dezentrale Abholstation (14) eine Einrichtung (143) zur Aufnahme und zur Einlagerung von Empfängern abgegebener Warenkörbe (13) in ein Lager (142) der dezentralen Abholstation (14) aufweist.

7. System (1) nach einem der vorhergehenden Ansprüche,
**dadurch gekennzeichnet, dass**
die dezentrale Abholstation (14) als stationäre Einrichtung an einem für die Öffentlichkeit zugänglichen Ort ausgebildet ist.

8. System (1) nach einem der vorhergehenden Ansprüche 1 bis 7,
**dadurch gekennzeichnet, dass**
die dezentrale Abholstation (14) als mobile Einrichtung ausgebildet ist.

9. System (1) nach einem der vorhergehenden Ansprüche,
**dadurch gekennzeichnet, dass**
die Transferbehälter (13) jeweils eine Kühleinrichtung (130, 1301, 1302) zur Kühlung bzw. zum Kühlhalten von Waren, die im Transferbehälter (13) aufgenommenen sind, umfassen.

10. System (1) nach einem der vorhergehenden Ansprüche,
**dadurch gekennzeichnet, dass**
die Transferbehälter (13) eine Kennzeichnung aufweisen, und die dezentrale Abholstation (14) eine Einrichtung zur Erkennung der Kennzeichnung aufweist.

11. Verfahren zur Bereitstellung von Konsumgütern, insbesondere von Lebensmitteln, umfassend die folgenden Schritte:
a) Übertragung per Internet von Daten der Auswahl und zur Zusammenstellung eines Warenkorbs (13) aus einer Vielzahl von Waren; und
b) Kommissionierung der Waren zur Bereitstellung des individuellen Warenkorbs;
c) Transfer des kommissionierten Warenkorbs zu einer dezentralen Abholstation (14), die mittels eines Kühlsystems die darin gelagerte Warenkörbe (13) kühlt und die Transferbehälter nach- bwz. herunterkühlt;
d) Identifizierung eines Empfängers durch eine Identifikationseinrichtung der dezentralen Abholstation (14); und
e) Ausgabe eines bestimmten Warenkorbs entsprechend der Identifikation, **dadurch gekennzeichnet, dass**
die Ausgabe eines bestimmten Warenkorbs im Schritt e) in der Abholstation (14) durch ein Regalbediengerät durchgeführt wird, das den Warenkorb aus einem Regallager aufnimmt.

12. Verfahren nach Anspruch 11,
**dadurch gekennzeichnet, dass**
der Schritt d) eine automatische bzw. elektronische Identifizierung der Empfänger umfasst.

## Claims

1. System (1) for the provision of consumer goods, in particular foodstuffs, comprising: a user station (10) designed to enable selection of goods by a customer and to transmit the order for the selected goods; a central picking station (11) designed for picking goods to individually compose at least one basket of goods (13) to the customer's order; a remote collection station (14) designed to store the picked goods baskets (13) and to output a particular goods basket (13b) to a correspondingly identified recipient at an output device (141),
**characterised by the fact that**
the ordering of goods via the user station (10) is carried out over the internet, and the system (1) comprises transfer containers (13) which are transported between the stations of the system (1), wherein goods of a specific goods basket are accommodated in a transfer container (13), and the remote collection station (14) has a cooling system for cooling goods baskets (13) stored therein and for recooling or cooling the transfer containers, and has shelf storage (114) and a storage and retrieval device, wherein the goods baskets (13) containing ordered goods are deposited in the shelf storage, wherein the storage and retrieval device transports a goods basket (13) to the output device (141) as soon as the customer has identified himself.

2. System (1) in accordance with claim 1,
**characterised by the fact that**
the system (1) comprises a plurality of user stations (10) and a data exchange connection between the user station (10) and the central picking station (11) for the purpose of transmitting a picking order.

3. System (1) in accordance with any of the preceding claims,
**characterised by the fact that**
the system (1) comprises at least one central storage (12), wherein the central storage (12) has a cooling device for cooling perishable goods.

4. System (1) in accordance with any of the preceding claims,
**characterised by the fact that**
the remote collection station (14) has an identification device (1410) for identifying a recipient at the remote collection station (14).

5. System (1) in accordance with any of the preceding claims,
**characterised by the fact that**
the remote collection station (14) has an output device (141) for outputting one or more specific goods baskets (13).

6. System (1) in accordance with any of the preceding claims,
**characterised by the fact that**
the remote collection station (14) has a device (143) for receiving and storing goods baskets (13) deposited by recipients in storage (142) at the remote collection station (14).

7. System (1) in accordance with any of the preceding claims,
**characterised by the fact that**
the remote collection station (14) is designed as a stationary device at a location accessible to the public.

8. System (1) in accordance with any of preceding claims 1 to 7,
**characterised by the fact that**
the remote collection station (14) is designed as a mobile device.

9. System (1) in accordance with any of the preceding claims,
**characterised by the fact that**
the transfer containers (13) each comprise a cooling device (130, 1301, 1302) for cooling and for keeping goods accommodated in the transfer container (13) cool.

10. System (1) in accordance with any of the preceding claims,
**characterised by the fact that**
the transfer containers (13) have a marking and that the remote collection station (14) has a device for recognising the marking.

11. Method for the provision of consumer goods, in particular foodstuffs, comprising the following steps: a) transmission via the internet of data relating to the selection and composition of a goods basket (13) from a plurality of goods; and
b) picking of the goods for the purpose of providing the individual goods basket;
c) transfer of the picked goods basket to a remote collection station (14) which cools the goods baskets (13) stored therein by means of a cooling system and cools or re-cools the transfer containers;
d) identification of a recipient by an identification device at the remote collection station (14); and
e) outputting of a specific goods basket in line with the identification, **characterised by** the fact that the outputting of a specific goods basket in step e) is carried out in the collection station (14) by a storage and retrieval device which receives the goods basket from shelf storage.

12. Method in accordance with claim 11,
**characterised by the fact that**
step d) comprises automatic or electronic identification of the recipients.

## Revendications

1. Système (1) pour mettre à disposition des biens de consommation, en particulier, des denrées alimentaires, comprenant :
un poste consommateurs (10) qui est configuré pour la sélection de marchandises par un consommateur et pour transmettre la commande des marchandises sélectionnées,
un poste central de préparation de commandes (11) qui est configuré pour la préparation de commandes de marchandises pour la constitution individuelle d'au moins un panier de marchandises (13) conformément à la commande du consommateur,
un poste de retrait décentralisé (14) qui est configuré pour le stockage des paniers de marchandises préparés (13) et pour la délivrance d'un panier de marchandises défini (13b) à un acheteur identifié de manière correspondante à un dispositif de délivrance (14),
**caractérisé en ce que**
la commande de marchandises se fait par le poste consommateurs (10) sur internet et que le système (1) présente des conteneurs de transfert (13) qui sont transportés entre les postes du système (1), des marchandises d'un panier de marchandises défini étant prises dans un conteneur de transfert (13) et le poste de retrait décentralisé (14) présentant un système de réfrigération pour refroidir les paniers de marchandises qui y sont stockés (13) et pour le refroidissement supplémentaire et/ou le refroidissement des conteneurs de transfert et un entrepôt à rayonnages (114) et un transstockeur, les paniers de marchandises (13) avec des marchandises commandées étant déposés dans l'entrepôt à rayonnages , le transstockeur transportant un panier de marchandises (13) vers le dispositif de délivrance (141) dès que le consommateur s'est identifié.

2. Système (1) selon la revendication 1, **caractérisé en ce que** le système (1) présente une multitude de postes consommateurs (10) et une liaison d'échange de données entre le poste consommateurs (10) et le poste central de préparation de commandes (11) pour transmettre une commande de préparation.

3. Système (1) selon l'une des revendications précédentes, **caractérisé en ce que** le système (1) présente un entrepôt central (12), l'entrepôt central (12) présentant un dispositif de réfrigération pour refroidir des marchandises périssables.

4. Système (1) selon l'une des revendications précédentes, **caractérisé en ce que** le poste de retrait décentralisé (14) présente un dispositif d'identification (1410) pour l'identification d'un réceptionnaire au poste de retrait décentralisé (14).

5. Système (1) selon l'une des revendications précédentes, **caractérisé en ce que** le poste de retrait décentralisé (14) présente un dispositif de délivrance (14) pour délivrer un ou plusieurs paniers de marchandises définis (13).

6. Système (1) selon l'une des revendications précédentes, **caractérisé en ce que** le poste de retrait décentralisé (14) présente un dispositif (143) pour recevoir et pour stocker des réceptionnaires de paniers de marchandises délivrés (13) dans un entrepôt (142) du poste de retrait décentralisé (14).

7. Système (1) selon l'une des revendications précédentes, **caractérisé en ce que** le poste de retrait décentralisé (14) est configuré comme un dispositif fixe à un endroit accessible au public.

8. Système (1) selon l'une des revendications précédentes 1 à 7, **caractérisé en ce que** le poste de retrait décentralisé (14) est configuré comme un dispositif mobile.

9. Système (1) selon l'une des revendications précédentes, **caractérisé en ce que** les conteneurs de transfert (13) comprennent chacun un dispositif de réfrigération (130, 1301, 1302) pour refroidir et/ou pour maintenir au froid des marchandises qui sont prises dans le conteneur de transfert (13).

10. Système (1) selon l'une des revendications précédentes, **caractérisé en ce que** les conteneurs de transfert (13) présentent une identification et que le poste de retrait décentralisé (14) présente un dispositif pour reconnaître l'identification.

11. Procédé pour mettre à disposition des biens de consommation, en particulier, des denrées alimentaires, comprenant les étapes suivantes :
a) tranmission par internet de données de la sélection et pour la composition d'un panier de marchandises (13) à partir d'une multitude de marchandises et
b) préparation des marchandises pour mettre à disposition le panier de marchandises individuel ;
c) transfert du panier de marchandises préparé à un poste de retrait décentralisé (14) qui refroidit les paniers de marchandises qui y sont stockés au moyen d'un système de réfrigération et qui refroidit de manière supplémentaire et/ou refroidit les conteneurs de transfert ;
d) identification d'un réceptionnaire par un dispositif d'identification du poste de retrait décentralisé (14) et
e) délivrance d'un panier de marchandises défini selon l'identification,
**caractérisé en ce que**
la délivrance d'un panier de marchandises défini est exécutée à l'étape e) dans le poste de retrait (14) par un transstockeur qui prend le panier de marchandises dans un entrepôt à rayonnages.

12. Procédé selon la revendication 11, **caractérisé en ce que** l'étape (d) comprend une identification automatique et/ou électronique des réceptionnaires.
